# EUROPEAN PATENT APPLICATION

(11) **EP 3 818 832 A1**
(43) Date of publication of application: **12.05.2021**
(21) Application number: 18925192.9
(22) Date of filing: 29.12.2018
(51) Int. Cl.: A22C 25/02

(54) **FISH SCALER**

(30) Priority: 05.07.2018 RU 2018124758
(71) Applicant: Gorianina, Nadezhda Konstantinovna, St.Petersburg, 197371 (RU); Golubev, Alexey Vladimirovich, St. Petersburg, 197738 (RU)
(72) Inventor: Gorianina, Nadezhda Konstantinovna, St.Petersburg, 197371 (RU); Golubev, Alexey Vladimirovich, St. Petersburg, 197738 (RU)
(74) Representative: Jeck, Anton
(86) International application number: PCT/RU2018/000914
(87) International publication number: WO 2020/009604

(57) **Abstract**

A fish scaler includes a plate which is connected to a handle and has cleaning elements. The end of the handle on the side of the plate comprising the cleaning elements is provided with a sharp edge. The opposite end of the handle is rounded, tapering toward the end face, and is configured with a spoon-shaped recess on the side where the cleaning elements are arranged. The invention makes it possible to remove scales in hard-to-reach areas, to remove slime with scale residue and to scrape the fish cavity after gutting.

## Description

### Background of the invention

There is a Fish Scaler for manual cleaning of fish from scales, containing a plate-shaped working part with equidistant cleaning elements and a handle; as cleaning elements, square teeth are located on the working surface in rows diagonally relative to the axis of symmetry of the working part, RU 13746 U1, published on 17.05.2000.

The existing Fish Scaler has a low efficiency and quality of fish cleaning, due to the inability to remove scales in hard-to-reach places due to the lamellar (not convex) shape of the working part, as well as the inability to remove mucus from the fish with the remains of scales and scraping the fish cavity after evisceration.

There is a Fish Scaler for manual cleaning of fish from scales, containing a working part with cleaning elements in the form of spikes and a handle; the working part is made in the form of a plate with a bend, a radius of at least 5 cm and a bend connected to the handle, and is equipped with holes in the form of openings, and the spikes are formed by the walls of the openings on the convex side of the plate, RU 2149554 C1, published on 27.05.2000.

This fish scaler has a number of serious drawbacks. First of all, it should be pointed out that this device is actually a grater, and the sharp spikes formed by the walls of the holes will not only separate the scales from the fish, but also intensively scratch the surface of the fish, damaging it.

Fish scaler has a low efficiency and quality of fish cleaning, due to the inability to remove scales in hard-to-reach places due to the plate shape of the working part, as well as the inability to remove mucus from the fish with the remains of scales and scraping the fish cavity after evisceration. In addition, there is an intense splashing of scales in the process of cleaning the fish. The sharp edges of the spikes formed by the openings are very traumatic.

There is a fish scaler containing a working part with cleaning elements in the form of rounded teeth and a handle; the plate is slightly convex and turned with its concave side, equipped with teeth, to the scales of the fish, FR 638399 A, published on 23.05.1928.

This technical solution, taken as a prototype of this utility model, to a lesser extent in comparison with the analog described above, damages the fish carcass due to rounded spikes; for the same reason, it is less traumatic.

The cleaning elements are rigidly fixed relative to the plate in all the described fish scalers, as a result of which: the fish scallops do not effectively separate the scales from the carcass, especially large and rigid ones. The fish carcass can be damaged when trying to separate the scales more completely.

Fish scalers have a low efficiency and quality of cleaning fish, due to the inability to remove scales in hard-to-reach places due to the plate shape of the working part, as well as the inability to remove mucus from the fish with the remains of scales and scraping the fish cavity after evisceration. In addition, there is an intense splashing of scales in the process of fish cleaning.

### Disclosure of the utility model

The objective of this utility model is to improve the efficiency and quality of cleaning fish from scales without damaging the carcass during the cleaning process by enabling the removal of scales in hard-to-reach places, removing mucus from the fish with the remains of scales and scraping the fish cavity after evisceration, as well as preventing the splashing of scales.

The task can be completed because according to the utility model, the fish scaler, which includes a plate with cleaning elements connected to the handle, the end of the handle on the side of the plate with cleaning elements is provided with a blade with a sharp edge, in this case, the opposite end of the handle is rounded, tapering to the end, with a spoon- shaped recess on the side of the location of the cleaning elements.

The end of the handle side plate with cleaning elements can be made curved, convex side facing towards the cleaning elements and the opposite end of the handle can be made curved, with the concave side facing towards the cleaning elements.

Preferably, the plate on the back side is closed with a lid fixed on the handle, and the cleaning elements are made in the form of spikes, including a working element made in the form of a rectangular parallelepiped, the middle part of the spike is cylindrical in shape and the base of the stud of cylindrical shape, the diameter of which exceeds the diameter of the middle part of the spike, at the ends of the bases of the spikes are recesses of conical shape with a rounded bottom, there are holes in the plate, the diameter of which exceeds the diameter of the middle part of the spike by the size of the gap, but less than the diameter of the base of the spike, on the cover from the side of the plate opposite the holes, there are protrusions of conical shape with a rounded top, while the solid angle α of the protrusions is less than the solid angle β of the recesses, the spikes in the middle parts are freely placed in the holes of the plate, and the cap protrusions are located inside the recesses at the base of the spikes with the possibility of resting the cap protrusions in the bottom of the recesses.

The applicant did not identify any technical solutions identical to the claimed one, which allows us to conclude that the utility model meets the "Novelty" ("N") criterion.

### Brief description of drawings

Further, the utility model is explained by a detailed description of the examples of its implementation with links to the drawings, which are given below:

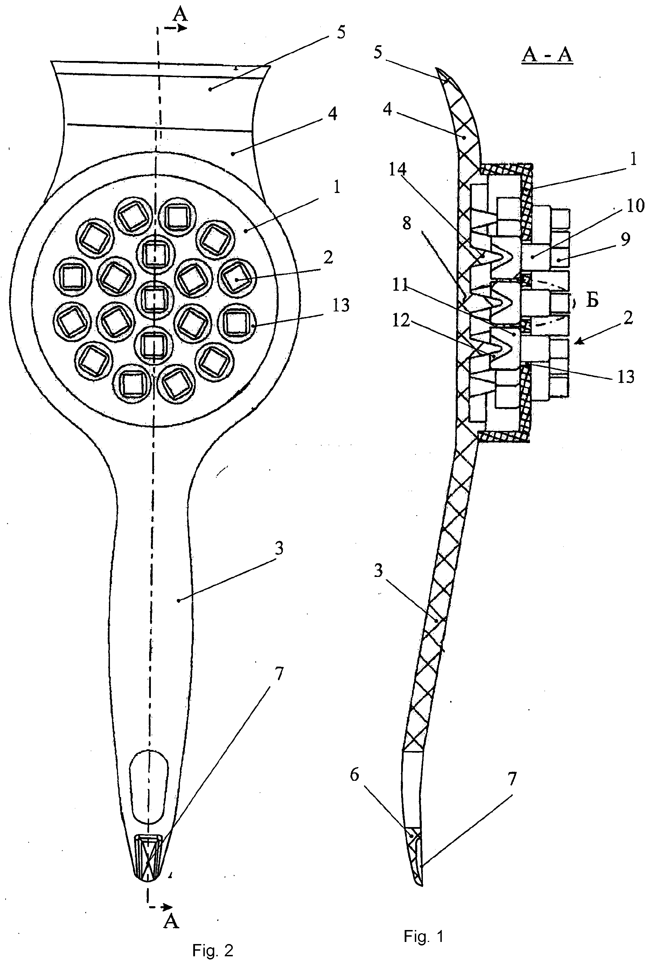

Fig 1 - fish scaler, longitudinal section;
Fig. 2- view from the working side of the fish scaler (on the right in Fig. 1);

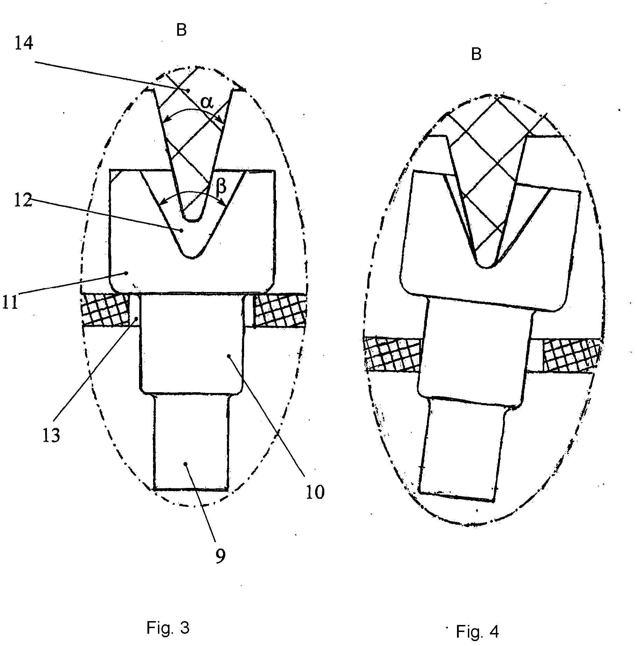

Fig. 3 - fragment B in Fig. 1 on an enlarged scale in the absence of contact of the spikes with the cleaned fish;
Fig. 4 - the same as in Fig. 3, the spikes come into contact with the fish during the scaling process.

### Best mode for carrying out the utility model

The scaler includes a specific example, a round plate 1 with the cleaning elements made in the form of spikes 2. Plate 1 is fixed to the handle 3. The end 4 of the handle 3 on the side of the plate 1 with the cleaning elements is provided with a blade 5 with a sharp edge, the shape of the blade can be rectangular, trapezoidal, with beveled or concave sides, etc. The Blade 5 may be made also with handle 3 or fixed thereto by any known means.

The opposite end 6 of the handle 3 is rounded, tapering to the end. At the end 6 of the handle 3 on the side of the location of the cleaning elements, a spoon-shaped recess 7 is made.

The end 4 of the handle 3 on the side of the plate 1 with the cleaning elements is made with a bend facing the convex side to the cleaning elements, and the opposite end 6 of the handle 3 is made with a bend facing the concave side to the cleaning elements.

The plate 1 on the back side is closed by a cover 8 fixed on the handle 3, in a specific example, the cover 8 is made at the same time with the handle 3. The spikes 2 along their length consist of three parts. The working element 9 is made in the form of a rectangular parallelepiped and contacts the scales in the process of cleaning the fish. The middle part 10 and the base 11 of the spike are cylindrical in shape. The base 11 diameter of the spike 2 exceeds the diameter of the middle part 10 of the spike. At the ends of the bases 11 of the spikes 2, recesses 12 of a conical shape with a rounded bottom are made, and holes 13 are made in the plate 1. In a particular example, one of the holes 13 is made in the center of the plate 1, and the remaining holes 13 are located on two concentric circles. The diameter of the holes 13 is more than the size of the gap (1.5 - 2 mm) the diameter of the middle portion 10 of the stud 2, but are smaller (1.5 - 2.5 mm) of the diameter of its base 11. On the cover 8 side plate 1 opposite the holes 13 are formed projections 14 of conical shape with a rounded top. The solid angle α of the protrusions 14 is 20-40° less than the solid angle β of the recesses 12. Spikes 2 medium pieces 10 freely (with the possibility of rotation on some angle in the plane of the drawing, in the plane perpendicular to the drawing plane and around the longitudinal axis of symmetry of the spike, and with the possibility of reciprocating movement), are located in the holes 13 of the plate 1. The protrusions 14 of the cover 8 are located inside the recesses 12 with the possibility of abutting the protrusions 14 into the bottom of the recesses 12. The spikes 2 in this example are made of polyamide, the other elements of the fish scaler are made of polystyrene. The device works as follows.

The cleaning is started from the cleaning elements (spikes 2) on the plate 1. The spikes 2 in the process of cleaning the fish move progressively along their longitudinal axes until the protrusions 14 rest against the bottom of the recesses 12. As a result, the protrusions 14 and recesses 12 constitute a hemispherical hinge pair. Under the influence of external forces, the spikes 2 rotate in the specified hinge, as well as around the longitudinal axis within the gaps between the middle part 10 of the spikes and the plate 1 and between the recesses 12 of the base 11 of the spikes 2 and the protrusions 14 of the cover 8. When moving the fish scaler in the opposite direction to the natural location of the scales, the edges of the working elements 9 of the spikes 2 separate the layers of the scales and, turning it out, separate the scales from the fish carcass. Due to the shape of the working elements 9 spikes and the slight angle of inclination of the spikes 2 to the surface to be cleaned, the cutting effect of the edges of the working elements 9 spikes is minimal and practically does not lead to damage to the fish carcass. Having considerable rigidity and, as a rule, covered with mucus, the scales fill the space between the working elements 9 of the spikes 2 and set them in motion.

Rotating relative to its axis and simultaneously swaying, the spikes 2 contribute to filling the space between them with scales.

In addition, due to the fact that the holes 13 in the plate 1 and, accordingly, the spikes 2 placed in them are located in concentric circles, an obstacle is created for the rectilinear movement of the scales, which is compacted and turns into a compact mass, which almost completely eliminates its splashing.

When the fish scaler is filled with scales, the latter can be easily removed by washing in water. The mobility of the spikes significantly increases the efficiency and quality of cleaning, since the spikes occupy the most favorable position for interaction with the scales during the movement of the device.

After removing the bulk of the scales, place the blade 5 so that it faces the fish with its concave side. The scales are removed with a blade 5 in hard-to-reach places and the slime with the remains of the scales is removed from the fish. The remaining scales are removed with the angle of the blade 5. Due to the implementation of the blade 5 with a sharp edge, the efficiency and quality of cleaning is significantly increased, since it is essentially a scraper. Due to the implementation of the blade 5 convex in relation to the plate 1 with cleaning elements and, therefore, concave in relation to the fish, it provides the most favorable location of the edge of the blade 5 for interaction with scales and mucus, as well as more space for placing removed scales and mucus, which also significantly increases the efficiency and quality of cleaning, while almost completely eliminating the spattering of scales.

After removing the mucus, the fish is gutted. All fish have blood clots in the abdominal cavity, along the spine.

Among cod fish, saber fish, and others, the abdominal cavity is covered with a blackish- gray film. Blood clots and the film when cleaning the fish are removed by scraping the end 6 of the handle 3, which is rounded, tapering to the end, with a spoon-shaped recess 7 on the side of the location of the cleaning elements; the end 6 of the handle 3 is essentially a spoon. Due to the implementation of the end 6 of the handle 3 in the form of a spoon, the efficiency and quality of cleaning is significantly increased. Due to the implementation of the end 6 of the handle 3 narrowed and concave in relation to the fish, it provides better capture of blood clots and film, as well as more space for their placement inside the spoon, which significantly increases the efficiency and quality of cleaning, while almost completely eliminating the spattering of scales.

Due to the implementation of all the fish scaler elements that come into contact with the fish during cleaning, without sharp edges, the fish carcass is not damaged during cleaning.

### Industrial applicability

Device sample is made with the use of known equipment in the factory.

According to the applicant, these circumstances indicate that this utility model meets the criterion of "Industrial Applicability" ("IA»).

## Claims

1. A fish scaler comprising a plate (1) with cleaning elements connected to the handle (3), **characterized in that** the end (4) of the handle (3) from side plate (1) with cleaning elements is provided with a blade (5) with sharp edge, while the opposite end (6) of the handle (3) is made rounded, tapering to the end, with spoon-shaped recess
(7) on the side of the arrangement of the cleaning elements.

2. A fish scaler according to claim 1, **characterized in that** the end (4) of the handle (3) from side plate (1) with cleaning elements are made curved, convex side facing towards the cleaning elements and the opposite end (6) of the handle (3) is made curved, with the concave side facing to the cleaning elements.

3. Fish cleaning according to claim 1, **characterized in that** the plate (1) on the back side is closed with a lid (8) fixed to the handle (3), and the cleaning elements are made in the form of spikes (2), including the working element (9), made in the form of a rectangular parallelepiped, the middle part (10) of the cylindrical spike and the base (11) of the cylindrical spike, diameter which exceeds the diameter of the middle part (10) of the spike, in the ends of the bases (11) of the spikes (2) recesses (12) of a conical shape with a rounded bottom are made, in the plate (1) holes (13) are made, the diameter of which exceeds by the amount of the gap the diameter of the middle part (10) of the spike (2), but less than the diameter of the base (11) of the spike (2), on the cover (8) from the side of the plate (1) opposite the holes (13) there are protrusions (14) of a conical shape with a rounded top, while the solid angle α of the protrusions (14) is less than the solid angle β of the recesses (12), the spikes (2) are freely placed in the holes (13) of the plate (1), and the protrusions (14) of the lid (8) are located inside the recesses (12) at the base (11) of the spikes (2) with the possibility of abutting the protrusions (14) of the lid (8) in the bottom of the recesses (12).
